# EUROPÄISCHE PATENTANMELDUNG

(11) **EP 0 606 640 A1**
(43) Veröffentlichungstag der Anmeldung: **20.07.1994**
(21) Anmeldenummer: 93120896.1
(22) Anmeldetag: 24.12.1993
(51) Int. Cl.: G11B 5/72

(54) **Magnetisches Aufzeichnungsmedium**

(30) Priorität: 15.01.1993 DE 4300857
(71) Anmelder: BASF Magnetics GmbH, D-68165 Mannheim (DE)
(72) Erfinder: Keller, Harald, Dr., D-67071 Ludwigshafen (DE); Jaeger, Ulrich, Dr., D-67376 Harthausen (DE); Steininger, Helmut, Dr., D-67551 Worms (DE); Kopke, Helmut, D-67256 Weisenheim (DE); Schomann, Klaus Dieter, Dr., D-67063 Ludwigshafen (DE); Schildberg, Hans-Peter, Dr., D-68161 Mannheim (DE)
(74) Vertreter: Karau, Wolfgang, Dr.

(57) **Zusammenfassung**

Die Erfindung betrifft ein magnetisches Aufzeichnungsmedium, umfassend ein unmagnetisches Trägermaterial und mindestens eine darauf aufgebrachte ferromagnetische Metallschicht sowie einer auf dieser Metallschicht ausgebildeten Schutzschicht aus einer Verbindung, welche an einem teilfluorierten Alkylrest einen H₂O₃P-, HO₃S-, NaO₃SS-, HS- oder H₃C-SO₃-Rest trägt.

## Beschreibung

Die Erfindung betrifft ein magnetisches Aufzeichnungsmedium, umfassend ein unmagnetisches Trägermaterial und mindestens eine darauf aufgebrachte ferromagnetische Metallschicht sowie einer auf dieser Metallschicht ausgebildeten Schutzschicht aus einem organischen Material.

Die magnetischen Schichten der üblichen Aufzeichnungsträger bestehen aus polymeren organischen Bindemitteln mit darin fein verteilten magnetischen Oxid- oder Metallteilchen. In dem Bestreben die Aufzeichnungsdichte der magnetischen Aufzeichnungsträger insbesondere auf dem Gebiet der Video- und Datenaufzeichnung zu erhöhen, war es erforderlich die Schichtdicken der Aufzeichnungsschicht stetig weiter zu verringern. Derartige dünne Schichten lassen sich jedoch nicht mehr mit den Oxid- oder Metallteilchen/Bindemittelschichten erreichen. Es wurde daher schon vorgeschlagen, dünne ferromagnetische Metallschichten als Aufzeichnungsschichten einzusetzen. Bekannt sind chemisch oder elektrolytisch abgeschiedene ferromagnetische Metall- bzw. Legierungsschichten, insbesondere aus Kobalt und/oder Nickel sowie vor allem aber auf das Trägermaterial aufgedampfte oder aufgesputterte ferromagnetische Schichten der Metalle oder Legierungen von z.B. Eisen, Kobalt, Nickel, Chrom und Seltene Erden.

Derartige ausgebildete Aufzeichnungsträger werden jedoch meist im ständigen mechanischen Kontakt mit dem Magnetkopf verwendet. Dies bedeutet, daß die Oberfläche der Magnetschicht hervorragende Korrosions- und Abriebfestigkeit aufweisen muß. Da jedoch die für die Aufzeichnungsschichten geeigneten ferromagnetischen Metallschichten meist keine entsprechenden Eigenschaften aufweisen, ist die Ausbildung von Schutzschichten erforderlich. Bei der Auswahl solcher Schutzschichten ist darauf zu achten, daß weder das Aufbringen der Schutzschicht noch die Schutzschicht selbst in irgendeiner Weise die Magnetschicht nachteilig beeinflußt.

Zur Lösung dieser Probleme wurde bereits eine Vielzahl von Vorschlägen gemacht. So beschreibt die US-A 3 767 369 das Aufbringen einer Rhodiumschutzschicht zur Verbesserung der Harte und der Gleiteigenschaft, wobei zur Verbesserung der zu geringen Haftung des Rhodiums auf der Magnetschicht eine Zinn-Nickel-Zwischenschicht aufgebracht werden muß. Dieses Verfahren erbringt weder die inzwischen geforderten Schutzschichteigenschaften noch ist deren Aufbringen einfach und problemlos zu bewerkstelligen. Für alle jenen Fälle bei denen die metallische Magnetschicht kobalthaltig ist, wurde vorgeschlagen, diese Magnetschicht bei vorgegebener Feuchtigkeit an Luft zu tempern und damit oberflächlich zu oxidieren (US-A 3 353 166, US-A 4 029 541). Ein solches Verfahren weist jedoch besondere Nachteile auf. So kann ein Temperprozeß, der zur Fertigung der genannten Schutzschichten nötig ist, sowohl die magnetischen Eigenschaften der Aufzeichnungsschicht selbst als auch an sich übliche Unter- oder Zwischenschichten derart beeinflussen, daß sie ihrerseits wieder die Eigenschaften der Magnetschichten beeinträchtigen.

Nach anderen Verfahren werden unterschiedliche Schutzschichten im Vakuum, meist durch Sputtern, aufgebracht, so gemäß der US-A 4 277 540 Schichten aus Gold, Tantal, Niob, Platin, Chrom, Wolfram und Rhodium sowie die Nitride oder Carbide des Siliciums, Zirkons, Hafniums und Titans und gemäß der US-A 4 268 369 Schichten aus Siliciumdioxid. Des weiteren werden in der DD-A 109 101 für Magnetspeicher mit metallischer Dünnschicht Schutzschichten aus im Vakuum aufgewachsenen Kohlenstoffschichten beschrieben. Solche Kohlenstoffschutzschichten sind allerdings wegen eines ungenügenden Korrosionsschutzes wenig für die rein metallischen Magnetschichten geeignet. Auch die Herstellung einer Deckschicht aus einem Kohlenstoff und Wasserstoff enthaltenden plasmapolymerisierten Film ist bekannt (DE-A 35 45 794).

Auch das Aufbringen flüssiger Oligomere, z.B. von Perfluorpolyethern, auf die zu schützende Magnetschicht ist beispielsweise aus der US-PS 3 778 308 bekannt. Neben der Verwendung unterschiedlichster, meist Fluorgruppen-tragender Substanzen, wie z.B. in EP-A 282 188 oder EP-A 320 241 beschrieben, zur Ausbildung von Schutzschichten wurde auch schon vorgeschlagen, hierfür Kombinationen aus festen und flüssigen Gleitmitteln, wie z.B. Semifluorluorverbindungen und Perfluorpolyether (DE-A 38 16 467) oder Kohlenstoffschichten in Verbindung mit fluorierten Produkten (JP A 79 916/1989) sowie von durch Plasmazersetzung entstandenen Kohlenstoffschichten zusammen mit Organofluorverbindungen (US-A 4 816 334) heranzuziehen. Ein wesentliches Problem bei der Verwendung der perfluorierten Polyether ist deren schlechte Löslichkeit in organischen nichtfluorierten Lösungsmitteln.

Alle diese Schutzschichten bringen zwar für die jeweils vorgesehene Problemstellung eine Verbesserung, sie können jedoch nicht in allen Eigenschaften, wie vor allem in Abrieb-, Gleit- und Dauerstandsfestigkeit sowie hinsichtlich Korrosion befriedigen und dabei gleichzeitig die Aufzeichnungseigenschaften der Magnetschicht nicht nachteilig beeinflussen.

Aufgabe der Erfindung war es daher, ein magnetisches Aufzeichnungsmedium bereitzustellen, bei dem die auf der ferromagnetischen Metalldünnschicht erzeugte Schutzschicht die vorgenannten Nachteile nicht aufweist und sich insbesondere durch gute Verschleiß- und Korrosionsfestigkeit auszeichnet.

Es wurde nun gefunden, daß sich bei einem magnetischen Aufzeichnungsmedium, umfassend ein unmagnetisches Trägermaterial und mindestens eine darauf aufgebrachte ferromagnetische Metallschicht sowie einer auf der Metallschicht ausgebildeten Schutzschicht die Aufgabe lösen läßt, wenn die Schutzschicht aus einer Verbindung der allgemeinen Formel I

X-(CH₂)ₙ-(CF₂)ₘ-Y (I)

besteht, worin
- X: einen H₂O₃P-, HO₃S-, NaO₃SS-, HS- oder H₃C-SO₃-Rest,
- Y: einen CH₃- oder CF₃-Rest,
- n: eine ganze Zahl zwischen 3 und 11 und
- m: eine ganze Zahl zwischen 0 und 7
bedeuten.

Im Rahmen der Erfindung besonders geeignete Substanzen für die Schutzschicht sind insbesondere die folgenden Verbindungen 1 bis 8:

H₂O₃P-(CH₂)₁₁-CH₃ (1)

HO₃S-(CH₂)₁₁-CH₃ (2)

HS-(CH₂)₁₁-CH₃ (3)

Na⁺-O₃S-S-(CH₂)₂-(CF₂)₇-CF₃ (4)

Na⁺-O₃S-S-(CH₂)₂-(CF₂)₅-CF₃ (5)

H₃C-SO₃-(CH₂)₂-(CF₂)₇-CF₃ (6)

H₃C-SO₃-(CH₂)₂-(CF₂)₅-CF₃ (7)

HS-(CH₂)₂-(CF₂)₇-CF₃ (8)

Die Herstellung dieser Verbindungen wird nach den bekannten Methoden der organischen Chemie durchgeführt. So wird die Verbindung (1) in zwei Stufen durch Arbusow-Reaktion von Dodecylbromid mit Triethylphosphit und anschließender saurer Hydrolyse des Phosphonsäurediethylesters hergestellt. Bei den Substanzen (4) bis (8) wird ausgehend von den fluorierten Alkoholen durch Reaktion mit Methansulfonsäurechlorid die Verbindungen (6) und (7) erhalten, aus welchen durch Umsetzung mit Natriumthiosulfat die Verbindungen (4) und (5) entstehen sowie durch saure Hydrolyse der Verbindung (4) dann die Verbindung (8) erhalten wird.

Die magnetischen Auf zeichnungsträger mit ferromagnetischer Metalldünnschicht und ihr Aufbau aus unmagnetischem Trägermaterial, gegebenenfalls unmagnetischer Zwischenschicht und ferromagnetischer Metalldünnschicht sind bekannt. Als Trägermaterial sind sowohl starre als auch flexible Materialien üblich. Vorwiegend werden Scheiben aus Aluminium oder deren Legierungen sowie Scheiben oder Folienbahnen aus Polyethylenterephthalat oder Polyimid eingesetzt.

Zur Ausbildung geeigneter Magnetschichten werden die Trägermaterialien mit einer unmagnetischen Unterschicht versehen. Bekannt sind bei plattenförmigen Aluminium-Trägermaterialien chemisch bzw. autokatalytisch abgeschiedene amorphe Nickel-Phosphor-Legierungsschichten mit einem Phosphoranteil von 7 bis 11 Gew.%. Die Schichtstärken betragen üblicherweise 5 bis 50, insbesondere 10 bis 30 µm. Die so aufgebrachten unmagnetischen Unterschichten bewirken im Falle der Aluminiumträgermaterialien eine Verbesserung in der Bearbeitbarkeit der Oberfläche verglichen mit dem unbeschichteten Aluminiumträger.

Als ferromagnetische Metalldünnschichten kommen die üblichen mit Schichtstärken von etwa 300 bis 1500 Å in Frage, die in an sich bekannter Weise durch chemische Abscheidung, galvanische Abscheidung oder durch Aufdampfen bzw. Aufsputtern, d.h. Abscheidung der Metalle oder Metallegierungen im Hochvakuum auf die Träger abgeschieden werden. Als geeignete magnetische Materialien sind Eisen, Nickel, Kobalt oder deren Legierungen untereinander oder mit geringen Anteilen anderer Elemente zu nennen. Geeignete kobalthaltige ferromagnetische Metalldünnschichten sind u.a. Kobalt-Phosphor-, Kobalt-Bor- sowie Kobalt-Nickel-, Kobalt-Nickel-Eisen-, Kobalt-Eisen- sowie Phosphor-, Bor- und/oder Stickstoff-enthaltende Legierungen der genannten Art, z.B. Legierungen aus 95 bis 98 % Kobalt und 2 bis 10 % Phosphor, 30 bis 20 % Nickel und 70 bis 80 % Kobalt, 90 % Kobalt, 9 % Nickel und 1 % Phosphor, 88 % Kobalt, 9 % Nickel und 3 % Bor oder 40 bis 50 % Kobalt, 40 bis 50 % Nickel und 1 bis 5 % Bor. Mit diesen Legierungen lassen sich durch chemische Abscheidung auf polierten Substraten Filme von unter 60 nm Dicke herstellen mit z.B. einer Koerzitivfeldstärke von 20 bis 75 kA/m und einer Sättigungsmagnetisierung von 1 bis 1,5 Tesla. Ebenfalls geeignet sind durch einen Sputterprozeß erzeugte ferromagnetische Schichten, welche gegebenenfalls auf eine aufgesputterte Chromzwischenschicht niedergeschlagen werden. Gleichfalls bekannt ist eine Zulegierung von Chrom zur Magnetschicht.

Die Ausbildung der Schutzschicht zur Herstellung der erfindungsgemäßen Aufzeichnungsmedien erfolgt in üblicher Weise. Hierbei wird über die Walze eine Lösung der Verbindungen der Formel (I) auf die Oberfläche der Metalldünnschichtmedien übertragen und anschließend das Lösungsmittel, das beispielsweise Tetrahydrofuran sein kann, in einem Trockenkanal entfernt. Durch Variation der Walzenparameter und der Konzentration der Substanz gemäß Formel (I) im Lösungsmittel läßt sich die Dicke der Schutzschicht auf den erfindungsgemäßen Aufzeichnungsmedien einstellen. Als besonders vorteilhaft hat sich eine Konzentration von 0,01 bis 0,04 Gew.% erwiesen. Bei höherer Konzentration wird die Ausbildung der Schutzschicht uneinheitlich und außerdem kommt es zu Problemen durch die Ablagerung der aufgebrachten Substanz an den Magnetköpfen der Aufnahme- und Wiedergabegeräte. Das Aufbringen der die Schutzschicht bildenden Verbindung kann auch mittels Durchziehen des Aufzeichnungsträgers durch die Lösung der jeweiligen Substanz erfolgen.

Die erfindungsgemäßen magnetischen Aufzeichnungsträger zeigen eine hervorragende mechanische Festigkeit der Oberfläche die sich durch eine besondere Widerstandsfestigkeit bei der vielfachen Benutzung des Aufzeichnungsträgers bewährt. Ebenfalls sind die erfindungsgemäßen magnetischen Aufzeichnungsträger durch die Schutzschicht sehr stabil gegen die durch Luft bzw. Luftfeuchtigkeit verursachte Korrosion der dünnen magnetischen Metallschichten.

Die Erfindung sei anhand des folgenden Beispiels näher erläutert.

Hierzu wurden 0,02 gew.-%ige Lösungen der in der folgenden Tabelle angegebenen Verbindungen in Tetrahydrofuran hergestellt. Durch diese Lösungen werden Magnetbänder, bestehend aus einem PET-Trägermaterial und einer darauf durch Aufdampfen erzeugten 200 nm dicken (Co₈₀Ni₂₀)-Schicht, mit einer Geschwindigkeit von etwa 1,35 mm/s gezogen. Die Trocknung erfolgt durch Verdunsten des Tetrahydrofurans.

Neben den im Rahmen der Erfindung bevorzugten Verbindungen wurde zum Vergleich gegenüber dem Stand der Technik Fombline-Z-DOL, ein Perfluorpolyether mit endständigen Hydroxylgruppen der Firma Montedison, herangezogen.

Die Wirkung der auf diese Weise auf den Metalldünnschichtmagnetbändern erzeugten Schutzschicht wurde durch Messung der superquasistatischen Reibung (SQR) ermittelt. Dazu werden die Magnetbänder oszillierend, d.h. vorwärts/rückwärts über einen Metallstift gezogen. Dabei beträgt der Bandzug vor dem Metallstift 30 cN, der Umschlingungswinkel 90^{o} und das Prüfklima 23^{o}C, 50 % rel. Feuchte. Die Messung des Reibungskoeffizienten erfolgt bei Bandgeschwindigkeiten von 550 µm/s (V₁) und 13 µm/s (V₂). Kleine Reibungskoeffizienten entsprechen einer geringen Reibung zwischen Band und Metallstift, wobei vor allem bei der geringeren Geschwindigkeit V₂ überwiegend Haftreibungskräfte erfaßt werden.

**Tabelle**

| | Reibungskoeffizient bei | |
|---|---|---|
| | V₁ | V₂ |
| Verbindung (1) | 0,31 | 0,17 |
| Verbindung (2) | 0,18 | 0,13 |
| Verbindung (3) | 0,29 | 0,21 |
| Verbindung (4) | 0,18 | 0,16 |
| Verbindung (5) | 0,27 | 0,28 |
| Verbindung (6) | 0,16 | 0,15 |
| Verbindung (7) | 0,18 | 0,14 |
| Fombline-Z-DOL | 0,36 | 0,18 |

## Patentansprüche

1. Magnetisches Aufzeichnungsmedium, umfassend ein unmagnetisches Trägermaterial und mindestens eine darauf aufgebrachte ferromagnetische Metallschicht sowie einer auf der Metallschicht ausgebildeten Schutzschicht, dadurch gekennzeichnet, daß die Schutzschicht aus einer Verbindung der allgemeinen Formel I
X-(CH₂)ₙ-(CF₂)ₘ-Y (I)
besteht, worin
X einen H₂O₃P-, HO₃S-, NaO₃SS-, HS- oder H₃C-SO₃-Rest,
Y einen CH₃- oder CF₃-Rest,
n eine ganze Zahl zwischen 3 und 11 und
m eine ganze Zahl zwischen 0 und 7
bedeuten.
